(19) Europäisches Patentamt
European Patent Office
Office européen des brevets

(11) **EP 1 907 696 B1**

(12) **FASCICULE DE BREVET EUROPEEN**

(45) Date de publication et mention
de la délivrance du brevet:
**23.12.2015 Bulletin 2015/52**

(21) Numéro de dépôt: **06794185.6**

(22) Date de dépôt: **17.07.2006**

(51) Int Cl.:
**F03D 7/06** *(2006.01)*     **F03D 3/04** *(2006.01)*

(86) Numéro de dépôt international:
**PCT/FR2006/001738**

(87) Numéro de publication internationale:
**WO 2007/012726 (01.02.2007 Gazette 2007/05)**

(54) **DISPOSITIF EOLIEN**

WINDKRAFTMOTOR

WIND POWER ENGINE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **28.07.2005 FR 0508054**

(43) Date de publication de la demande:
**09.04.2008 Bulletin 2008/15**

(73) Titulaire: **Gual, Georges
83200 Toulon (FR)**

(72) Inventeur: **Gual, Georges
83200 Toulon (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**EP-A- 0 046 122         WO-A-98/07981
DE-A1- 4 340 158         US-A- 4 047 834
US-A1- 2002 109 358**

## Description

La présente invention concerne, de façon générale, un dispositif éolien pour la production d'énergie mécanique à partir d'une force éolienne.

Plus particulièrement, l'invention concerne un dispositif éolien comprenant :

- un stator doté de pales de stator ;
- un rotor doté de pales de rotor et disposé à l'intérieur d'une zone creuse du stator, ledit rotor étant mobile en rotation par rapport au stator selon un axe de rotation,

les pales de stator étant disposées pour orienter vers le rotor un flux d'air arrivant depuis l'extérieur du stator et les pales de rotor étant adaptées pour entraîner à rotation ledit rotor selon ledit axe de rotation sous l'effet dudit flux d'air orienté.

C'est la raison pour laquelle des fabricants de dispositif éoliens ont développé diverses solutions visant à produire de l'énergie mécanique à partir du vent et ayant un rendement aussi important que possible afin de collecter autant d'énergie mécanique que possible dans le flux d'air entraînant le rotor.

Un dispositif du type précédemment défini, permettant une telle production d'énergie mécanique, est par exemple décrit dans le document brevet WO 98/07981.

Il est connu de ce document, un dispositif éolien comportant un stator et un rotor monté à l'intérieur du stator. Chacun des rotor et stator possède des pales. Les pales du stator permettent d'orienter les flux d'air environnant le dispositif pour le diriger vers l'endroit où se trouve le rotor qui peut alors collecter de l'énergie mécanique dans ce flux d'air orienté pour produire un couple rotatif du rotor autour de l'axe de rotation.

Dans ce contexte, la présente invention a pour but de proposer un dispositif éolien ayant un rendement élevé, c'est-à-dire capable de fournir une énergie de rotation du rotor aussi importante que possible à flux d'air constant.

A cette fin, le dispositif éolien de l'invention, par ailleurs conforme à la définition générique qu'en donne le préambule défini précédemment, est caractérisé par les caractéristiques de la revendication 1.

Grâce à cette caractéristique de profil concave, lors de la rotation du rotor, une pale donnée de ce rotor recevant un flux d'air sera motrice sur un angle de rotation du rotor supérieur à ce que serait cet angle si cette pale avait un profil plan ou convexe sur ses deux faces.

De plus, une telle concavité permet de collecter dans le flux d'air une énergie plus importante qu'avec une pale à profil plan ou convexe sur ses deux faces.

Définitions utiles pour la compréhension de l'invention décrite :

- la corde est le segment de droite joignant entre eux les bords d'attaque et de fuite d'une même pale et se trouvant dans un plan de coupe de cette pale ;
- la ligne médiane de profil est une courbe qui s'étend entre les bords d'attaque et de fuite de cette même pale et qui est située à équidistance entre les faces opposées de cette pale ;
- le profil est la forme extérieure d'une pale vue dans un plan de coupe de cette pale, ce plan de coupe étant perpendiculaire à l'axe de rotation du rotor ;
- l'épaisseur d'une pale est la distance séparant deux faces opposées d'une même pale et mesurée selon un axe perpendiculaire à une tangente à la ligne médiane de cette pale.

De plus, certaines au moins des pales de stator possèdent également un profil concave sur une face de pale de stator.

Ce profil de pale de stator permet à une pale de stator donnée de pouvoir orienter toujours dans une même direction différents flux d'air arrivant sur cette pale de rotor tout en accélérant ce flux d'air à proximité de son bord de fuite. Cette accélération locale du flux d'air est liée à l'obstruction que provoque cette pale dans le flux d'air et qui l'oblige à contourner la pale et donc à s'accélérer.

De ce fait la pale de rotor qui se trouve à proximité du bord de fuite de la pale de stator se trouve :

- dans un premier temps aspirée en direction de la pale de stator du fait de la dépression créée par la pale de stator dans le flux d'air, puis ;
- dans un second temps repoussée par le flux d'air orienté s'échappant du bord de fuite de la pale de stator.

Ce fonctionnement en deux temps fait que la pale de rotor subit une première accélération du fait de l'aspiration, ce qui la pousse à tourner jusqu'à atteindre une position limite où elle est alors repoussée par le flux d'air orienté, subissant ainsi une seconde accélération à partir de cette position limite.

Ainsi, à chaque fois qu'une pale de rotor à profil concave s'approche d'une pale de stator à profil concave, la pale de rotor devient motrice du rotor, cette motricité se fait sur un angle de rotation du rotor particulièrement important et au moins supérieur à ce qu'il est dans le cas où les pales de stator sont planes ou convexes sur leurs deux faces. Grâce à cette particularité, le rendement du dispositif de l'invention est amélioré.

On peut également faire en sorte que les pales du rotor possédant un profil concave aient chacune une ligne médiane de profil s'étendant entre un bord d'attaque de la pale et un bord de fuite de la pale et située à équidistance entre les faces opposées de cette pale et que l'épaisseur de la pale de rotor varie en suivant cette ligne médiane. Ce mode de réalisation préférentiel de l'invention permet d'avoir une pale de rotor à épaisseur variable entre ses bords d'attaque et de fuite ce qui va dans le sens d'une optimisation du profil de chaque face de la pale de rotor. Cette optimisation est fonction des différentes positions qu'adopte cette pale de rotor lors de la rotation du stator et fonction des différents flux d'airs orientés par les différentes pales de stator.

On peut également faire en sorte que chaque pale de rotor ait son bord d'attaque situé à plus grande distance de l'axe de rotation que son bord de fuite et que l'épaisseur de chaque pale du rotor possédant un profil concave soit en moyenne plus importante en se plaçant à proximité du bord d'attaque qu'en se plaçant à proximité du bord de fuite. Il a été remarqué qu'en faisant en sorte que la pale de rotor soit plus large du côté de son bord d'attaque que du côté de son bord de fuite et en disposant ce bord d'attaque vers l'extérieur du rotor on améliore alors le rendement mécanique du dispositif de l'invention.

On peut également faire en sorte que les pales du rotor à profils concaves aient leurs faces concaves toutes orientées dans un même premier sens trigonométrique ou anti-trigonométrique par rapport à l'axe de rotation du rotor et que les pales de stator à profils concaves aient leurs faces concaves toutes orientées dans un second sens opposé au premier. Ce mode de réalisation va dans le sens d'une homogénéisation du comportement aérodynamique du dispositif de l'invention, c'est-à-dire que ce dispositif se comportera sensiblement de la même manière si le vent change de direction, ce qui permet d'avoir toujours un rendement de dispositif sensiblement équivalent et ce quel que soit la direction du vent. De plus la durée de vie des paliers portant l'axe de rotation du dispositif est ainsi améliorée.

De plus, les pales du rotor possédant un profil concave aient une corde qui soit supérieure à la corde des pales de stator possédant un profil concave.

De ce fait une pale de stator a une superficie totale (somme des superficies de ses faces) inférieure à la superficie totale d'une pale du rotor.

Ce mode de réalisation permet de minimiser la quantité d'énergie collectée par les pales de stator orientant le flux d'air tout en maximisant la quantité d'énergie captée par les pales de rotor dont la corde est la plus importante.

On peut faire en sorte que chaque pale de rotor a profil concave ait son profil plus courbé à proximité d'un bord d'attaque qu'à proximité d'un bord de fuite.

Ce mode de réalisation exprime la dissymétrie du profil d'une aile de rotor. Il a été remarqué que cette dissymétrie est nécessaire pour permettre une amélioration du rendement moteur d'une pale.

En d'autres termes, la ligne médiane de profil de pale de rotor est plus courbe à proximité du bord d'attaque qu'à proximité du bord de fuite.

On peut également faire en sorte que chaque pale de stator a profil concave ait son profil plus courbé à proximité d'un bord d'attaque qu'à proximité d'un bord de fuite de cette pale de stator.

On peut également faire en sorte que toutes les pales de stator aient des profils de pales sensiblement identiques entre eux et préférentiellement que toutes les pales de rotor aient des profils de pales identiques entre eux.

On peut également faire en sorte qu'au moins l'un desdits profils concaves de pales du rotor soit une transformée, par rotation selon l'axe de rotation, d'un autre profil concave d'une autre pale du rotor. Grâce à ce mode de réalisation, toutes les pales liées entre elles par cette transformée géométrique possèdent un angle d'orientation constant. Cet angle d'orientation constant est l'angle formé entre la corde d'un profil et le rayon du rotor passant par le bord d'attaque de ce profil.

Cet angle d'orientation peut être constant ou variable en fonction de la vitesse de rotation du rotor ou en fonction de la vitesse du vent.

Dans tous les cas l'angle d'orientation des pales de rotors de profils identiques entre eux est le même pour toutes ces pales car cela permet d'équilibrer les efforts sur le rotor et d'optimiser le rendement en choisissant un angle d'orientation optimum.

De la même manière, on peut également faire en sorte qu'au moins l'un desdits profils concaves de pales du stator soit une transformée, par rotation selon l'axe de rotation, d'un autre profil concave d'une autre pale du stator.

Grâce à ce mode de réalisation, toutes les pales de stator liées entre elles par cette transformée géométrique possèdent un angle d'orientation constant.

De la même manière l'angle d'orientation d'une pale de stator est l'angle formé entre la corde du profil de cette pale de stator et l'axe (confondu avec le rayon du rotor) passant l'axe de rotation de rotor et passant par le bord d'attaque de ce profil de pale de stator. L'angle des pales de stator est différent de l'angle d'orientation des pales de rotor et est préférentiellement identique à toutes les pales de stator. L'angle d'orientation des pales de stator peut être constant ou variable en fonction de la vitesse de rotation du rotor et / ou en fonction de la vitesse du vent.

Dans tous les cas l'angle d'orientation des pales de stator est identique pour toutes ces pales car cela permet d'équilibrer les efforts sur le rotor et d'optimiser le rendement en choisissant un angle d'orientation optimum.

D'autres caractéristiques et avantages de l'invention ressortiront clairement de la description qui en est faite ci-après, à titre indicatif et nullement limitatif, en référence aux dessins annexés, dans lesquels:

la figure 1 représente une vue en coupe horizontale du dispositif éolien de l'invention, selon un plan perpendiculaire à l'axe de rotation du rotor ;

la figure 2 représente une vue en coupe d'une pale de rotor selon le plan de coupe perpendiculaire à l'axe de rotation du rotor ;

la figure 3 représente une série d'équations de lignes médianes types de pales de rotor du dispositif de l'invention ;

la figure 4 représente une vue en coupe d'une pale de stator selon le plan de coupe perpendiculaire à l'axe de rotation du rotor ;

la figure 5 représente une vue en coupe d'une pale de stator selon le plan de coupe perpendiculaire à l'axe de rotation du rotor.

L'invention concerne un dispositif éolien aussi appelé éolienne à axe vertical A. Ce type d'éolienne à l'avantage de pouvoir fonctionner sans avoir à être orienté face au vent, ce qui est avantageux dans des régions où le vent change fréquemment de direction ou encore dans des régions à vents tourbillonnaires (entre des bâtiments).

Une telle éolienne a aussi l'avantage de pouvoir fonctionner dans des plages de vent allant de 7 à 240 km/h ce qui est largement plus étendu que les éoliennes à hélice.

L'éolienne 1 de l'invention est composée d'un stator 2 comportant plusieurs pales de stator 3.

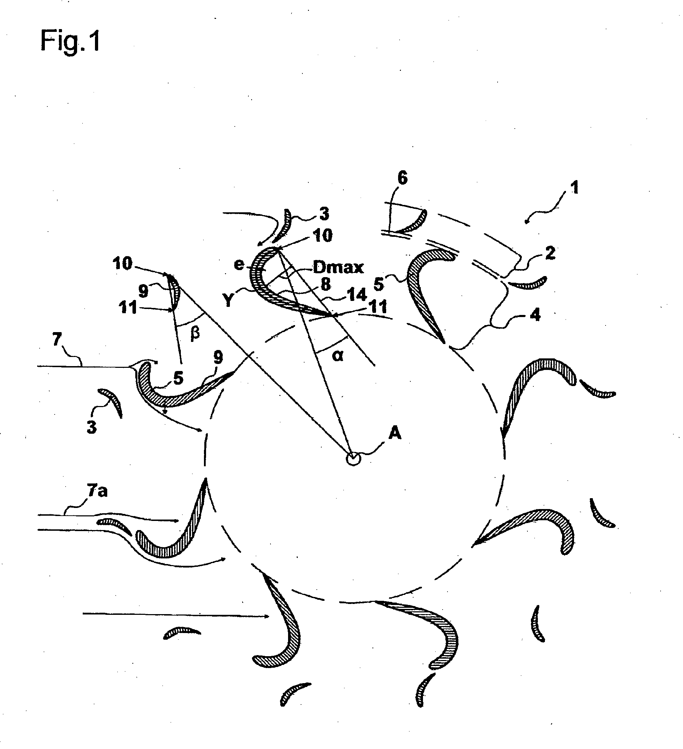

Ces pales de stator 3 sont assemblées sur un bâti non représenté sur la figure 1 et s'étendent verticalement selon des axes parallèles entre eux et parallèles à l'axe de rotation A du rotor 4. Toutes ces pales du stator sont positionnées selon une couronne 2 centrée autour de l'axe de rotation A. Les bords d'attaque 10 des pales de stator 3 sont situés selon le diamètre externe de la couronne 2 et les bords de fuite 11 de ces pales sont situés selon le diamètre interne de la couronne.

A l'intérieur du stator 2 en forme de couronne se trouve un rotor 4 monté à rotation par rapport au bâti et au châssis. Ce rotor 2 comporte 8 pales 5 réparties chaque 45° autour de l'axe de rotation A. Les pales de rotor 5 s'étendent parallèlement entre elles et à l'axe de rotation A et sont également disposées selon une couronne. Chaque bord d'attaque 10 d'une pale de rotor 5 est disposé sensiblement selon un diamètre externe de la couronne de rotor, ce diamètre externe étant légèrement inférieur au diamètre interne de la couronne de stator 2. Chaque bord de fuite 11 des pales de stator est disposé selon un diamètre interne de la couronne de rotor 4.

Les pales de stator constituent préférentiellement l'armature verticale du châssis permettant ainsi de remplir à la fois un rôle de pale et un rôle de structure rigide de maintien d'écartement entre une partie inférieure de châssis et une partie supérieure de châssis, chacune de ces parties inférieure et supérieure de châssis portant un palier par lequel passe l'axe de rotation de rotor.

Dans une mode de construction donné, le stator forme un ensemble monobloc dont les pales sont rigides et peuvent être coulées en une seule pièce.

Le stator comporte un plus grand nombre de pales, en l'occurrence 12, que le rotor qui en comporte 8.

Les pales de stator ont un profil de surface réduite par rapport aux surfaces des pales de rotor. Ainsi, les cordes des pales de stator sont plus courtes que les cordes des pales de rotor. Ici une corde de pale de rotor est au moins trois fois plus courte qu'une corde de pale de stator.

Les pales de rotor sont identiques entre elles. Les pales de stator sont également identiques entre elle afin d'équilibrer les efforts sur l'axe de rotation.

Pour une pale de rotor donnée, la distance maximale « D max » entre la face concave du profil et la corde 14 de cette pale est préférentiellement supérieure à un tiers de la longueur de corde.

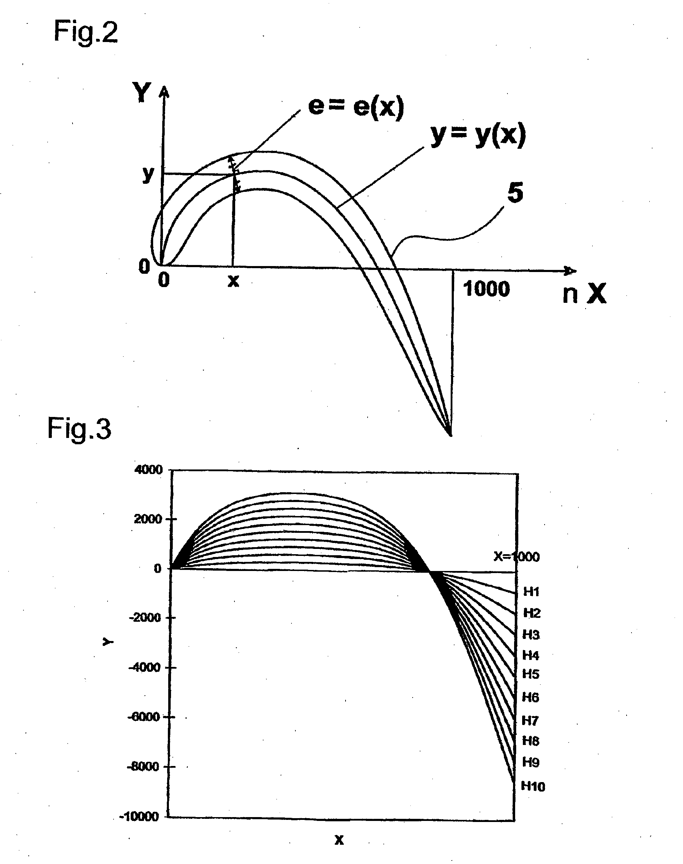

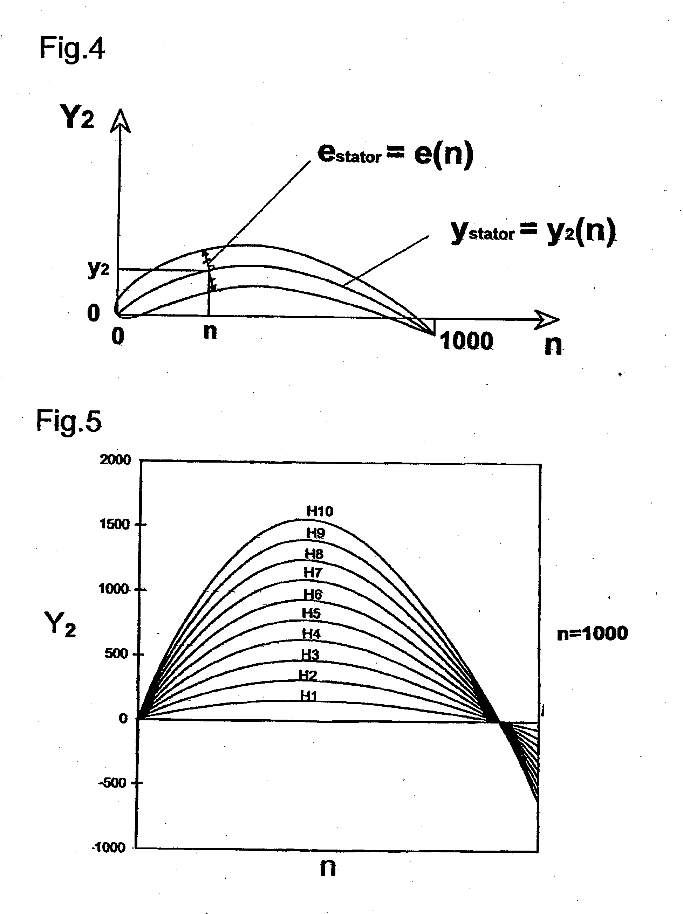

Comme on le verra par la suite en référence aux figures 3 et 5, plusieurs profils de pales de rotor et plusieurs profils de pales de stator peuvent convenir pour la mise en oeuvre de l'invention.

Le choix d'un profil de pale de rotor est toujours effectué en fonction du choix du profil de pale de stator et en fonction du nombre de ces pales respectives.

On préférera dans ce choix avoir un plus grand nombre de pales de stator que de pales de rotor et également que les profils courbes et concaves des pales de rotor soient plus prononcés que les profils courbes des pales de stator. Au niveau des calages aussi appelés orientations de pales, on fera en sorte que toutes les pales de rotor aient un même angle d'orientation par rapport aux rayons du rotor.

De même, on fera en sorte que toutes les pales de stator aient un même angle d'orientation par rapport aux rayons du rotor. L'angle d'orientation d'une pale est l'angle formé entre la corde de cette pale et le rayon du rotor passant par le bord d'attaque de cette pale.

Ici les angles d'orientation des pales sont fixes, mais il est possible qu'ils soient variables en fonction des vitesses de vent et des vitesses de rotation du rotor.

Pour chaque pale de rotor, l'angle d'orientation de pale α est ici de 17°, cet angle pouvant aller de -60° à +60°.

Pour chaque pale de stator, l'angle d'orientation de pale β est ici de -30°, cet angle pouvant aller de -60° à +60°.

On fera en sorte que les angles d'orientation des pales de rotor soient tous de signe opposé aux angles d'orientation des pales de stator. En d'autres termes, toutes les pales de rotor sont orientées pour avoir leurs faces concaves orientées selon un premier sens opposé au second sens d'orientation des faces concaves des pales de stator. De plus, en valeur absolue, on fera en sorte que les angles d'orientation des pales de stator soient supérieurs aux angles d'orientation des pales de rotor.

D'autre part pour le choix des pales, on fera en sorte que la distance maximale entre le profil concave d'une pale de stator et sa corde (appelée profondeur maximale de concavité de pale de stator) soit préférentiellement toujours inférieure à la profondeur maximale de concavité d'une pale de rotor.

Préférentiellement, pour un dispositif éolien donné la profondeur maximale de concavité de pale de stator est au moins deux fois plus petite que la profondeur maximale de concavité de pale de rotor et préférentiellement inférieure à quatre fois cette profondeur maximale de concavité de pale de rotor.

Le diamètre externe du rotor est préférentiellement choisi pour être important afin d'avoir une vitesse angulaire de rotation réduite et un couple moteur important. Il est d'ailleurs à noter qu'une éolienne selon l'invention dont le diamètre est d'environ 4 mètres et dont la hauteur de pales (de rotor et de stator) est d'environ 1,5 mètre produira une puissance de 10 KW pour un vent de 40m/s. Idéalement l'éolienne de l'invention entraîne une génératrice électrique reliée à son rotor.

Comme le montrent les figures 1, 2 et 4, chaque pale comporte une face creuse 8, 9 et une face bombée et a sensiblement une forme de U dont les deux branches s'écartent l'une de l'autre en allant vers leurs extrémités respectives. Le bord de fuite de chaque pale est plus effilé que son bord d'attaque.

Comme le montrent les figures 2 et 4, chaque pale à une épaisseur qui varie entre son bord d'attaque 10 et son bord de fuite 11, cette épaisseur est en moyenne plus importante à proximité du bord d'attaque qu'à proximité du bord de fuite. Dans un mode de réalisation particulier les pales de rotor peuvent comporter une portion souple et élastique au niveau de leurs bords de fuite afin que les profils s'adaptent en fonction de la vitesse de rotation de l'éolienne.

La portion souple d'une pale peut par exemple être réalisée avec un matériau élastomère.

Dans un mode de réalisation donné on pourra faire en sorte que certaines au moins des pales du dispositif de l'invention aient une valeur de corde variable lors du fonctionnement de l'éolienne. Ceci peut par exemple être réalisé à l'aide de pales à bords de fuites déformables combinés à un mécanisme associé à l'éolienne. Un tel mécanisme associé peut par exemple utiliser la force centrifuge du rotor pour commander la longueur de corde des pales de rotor en poussant des cames de commande des profils de pales. On peut également imaginer que des portions souples de pales soient lestées par endroit pour être plus sensible à la force centrifuge à ces endroits et pour ainsi avoir tendance à s'écarter lors de la rotation. La figure 2 représente une pale de rotor en coupe dans un plan perpendiculaire à l'axe de rotation du rotor.

Cette pale de rotor est définie selon une équation de la ligne médiane de pale :

$$y(x) = h \cdot [\ 4{,}53924825656325\text{E-}15.x^6 - 5{,}42573283309221\text{E-}12.x^5 - 8{,}22404455343498\text{E-}09.x^4 + 1{,}47496347999709\text{E-}05.x^3 - 9{,}14165759434127\text{E-}03.x^2 + 2{,}70776188332093\text{E+}00.x\ ]$$

Cette équation existe pour tout x ∈ [0 ; 1000] et pour h entier naturel ∈ [0 ; 10].

Pour une valeur de H donnée on obtient une courbe de ligne médiane donnée comme le montre la figure 3 qui représente toutes les lignes médianes possibles de pales de rotor en fonction de toutes les valeurs de H.

Le profil d'une pale de rotor est également défini par l'équation :

$$e = e(x)$$

où e est l'épaisseur de cette pale mesurée en chaque point de la ligne médiane Y. Il est à noter que pour tout point de la ligne médiane, l'épaisseur de pale est mesurée selon une direction qui est perpendiculaire à la tangente à la ligne médiane Y passant par ce point.

e(x) existe sur trois espaces continues de x avec une valeur constante k ∈ [0,001 ; 10]

Pour tout x ∈ [0 ; 51,3006], l'épaisseur de pale de rotor est définie par l'équation suivante :

$$e = e_1(x)$$

$$e_1(x) = k \cdot [\ -7{,}02909007666008E\text{-}08.x^6 + 1{,}42084379948226E\text{-}05.x^5$$
$$-1{,}13859019776896E\text{-}03.x^4 + 4{,}60183508412229E\text{-}02.x^3$$
$$-1{,}01685048226136E\text{+}00.x^2 + 1{,}39236480857944E\text{+}01.x\ ]$$

Pour tout x $\in$ [51,3006 ; 525,9584] l'épaisseur de pale de rotor est définie par l'équation suivante :

$$e = e_2(x)$$

$$e_2(x) = k \cdot [\ -5{,}94192525848265E\text{-}14.x^6 + 1{,}19655992810047E\text{-}10.x^5$$
$$-9{,}58413323952827E\text{-}08.x^4 + 3{,}86158163821414E\text{-}05.x^3$$
$$-8{,}12835542224338E\text{-}03.x^2 + 8{,}47965024169246E\text{-}01.x$$
$$+1{,}06357560124414E\text{+}02\ ]$$

Et enfin, pour tout x $\in$ [525,9584 ; 1000] l'épaisseur de pale de rotor est définie par l'équation suivante :

$$e = e_3(x)$$

$$e_3(x) = k \cdot [-2{,}61247460038894E\text{-}11.x^5 + 8{,}88126229434927E\text{-}08.x^4$$
$$-1{,}19740568019024E\text{-}04.x^3 + 7{,}96002077190937E\text{-}02.x^2$$
$$-2{,}60528565693262E\text{+}01.x + 3{,}5060023062638E\text{+}03]$$

Il est à noter que k est une valeur fixe que l'on choisi en fonction du profil souhaité et qui est unique sur les trois intervalles de x donnés ci-dessus.
Il est également à noter que plus la valeur de H est importante et plus la courbe médiane de la pale de rotor ainsi définie sera courbée.
De la même manière on défini le profil d'une pale de stator telle que celle représentée sur la figure 4, par la formule $y_{stator} = y_2(n)$
Avec $y_2(n) = h \cdot [-1{,}94954719956322E\text{-}15.n^6 + 5{,}40955746739588E\text{-}12.n^5 - 5{,}43503282008121E\text{-}09.n^4 + 2{,}61713607223324E\text{-}06.n^3 - 1{,}50507215970919E\text{-}03.n^2 + 8{,}01028434915793E\text{-}01.n]$
Cette équation est définie pour tout n $\in$ [0 ; 1000] et pour tout entier naturel h $\in$ [0 ; 10].
Pour une valeur de H choisie on obtient une courbe de ligne médiane donnée comme le montre la figure 5 qui représente toutes les lignes médianes possibles de pales de stator en fonction de toutes les valeurs de H.
Le profil d'une pale de rotor est également défini par l'équation de son épaisseur : $e_{stator} = e(n)$
où e est l'épaisseur de cette pale de stator mesurée en chaque point de la ligne médiane Ystator. Il est à noter que pour tout point de la ligne médiane, l'épaisseur de pale de stator est mesurée selon une direction qui est perpendiculaire à la tangente à la ligne médiane passant par ce point.
e(n) est définie sur trois espaces continues de n où n est la variable avec $k_{stator}$ constant $\in$ [0,001 ; 10]
Pour tout n $\in$ [0 ; 16,5034] l'épaisseur de pale de stator est définie par l'équation suivante :

$$e = e_1(n)$$

$$e_1(n) = k_{stator} \cdot [\, -1{,}67858234660962E\text{-}01.n^2 + 6{,}52945696164534E\text{+}00.n \,]$$

Pour tout $n \in [16{,}5034; 487{,}7208]$ l'épaisseur de pale de stator est définie par l'équation suivante :

$$e = e_2(n)$$

$$e_2(n) = k_{stator} \cdot [\, -1{,}31492504582848E\text{-}13.n^6 + 2{,}42841713930692E\text{-}10.n^5$$
$$- 1{,}76997851485279E\text{-}07.n^4 + 6{,}48783281727058E\text{-}05.n^3$$
$$- 1{,}30476488540274E\text{-}02.n^2 + 1{,}53332766717071E\text{+}00.n$$
$$+ 4{,}07781151901127E\text{+}01 \,]$$

Et enfin, pour tout $n \in [487{,}7208; 1000]$ l'épaisseur de pale de stator est définie par l'équation suivante :

$$e = e_3(n)$$

$$e_3(n) = k_{stator} \cdot [\, -4{,}2644799481108E\text{-}14.n^6 + 1{,}79579350585858E\text{-}10.n^5$$
$$- 3{,}12129258602187E\text{-}07.n^4 + 2{,}86483050345019E\text{-}04.n^3$$
$$- 1{,}4661774549957E\text{-}01.n^2 + 3{,}95910672914926E\text{+}01.n$$
$$- 4{,}26155072994836E\text{+}03 \,]$$

Il est à noter que plus la valeur de H est importante et plus la courbe médiane de la pale de stator ainsi définie sera courbée.

Il est également à noter que la valeur de $k_{stator}$ est une constante choisie en fonction du type de profil de pale de stator voulu, cette constante étant la même pour les trois domaines de n.

Préférentiellement, les pales de rotor et de stator à profils concaves sont conformés et disposés de façon que lorsqu'au cours de la rotation du rotor et lorsqu'un bord d'attaque d'une pale de rotor se retrouve face à un bord de fuite de stator alors la tangente de la ligne médiane de la pales de stator au niveau de son bord de fuite soit sensiblement parallèle à la tangente de la ligne médiane de la pale de rotor au niveau de son bord d'attaque. Cette caractéristique fait que dans la majorité des cas, le flux d'air orienté par une pale de stator donnée s'écoulera directement suivant la tangente de la ligne médiane de la pale de rotor au niveau de son bord d'attaque, ce qui réduit les turbulences néfastes au rendement du dispositif éolien.

En référence à la figure 1, le flux d'air 7 a arrive sur une pale de stator 3 du stator 2 et est divisé en deux flux déviés passant de chaque côté de la pale de stator. La pale de rotor dont le bord d'attaque est sensiblement en face du bord de fuite de la pale de stator se trouve aspiré par une dépression exercée sur sa face bombée par le flux dévié et refoulé par une surpression exercée par le flux orienté sur sa face concave.

**Revendications**

1. Dispositif éolien (1) comprenant :

    - un stator (2) doté de pales de stator (3) ;

- un rotor (4) doté de pales de rotor (5) et disposé à l'intérieur d'une zone creuse du stator (6), ledit rotor (4) étant mobile en rotation par rapport au stator (2) selon un axe de rotation (A), les pales de stator étant disposées pour orienter vers le rotor un flux d'air (7) arrivant depuis l'extérieur du stator et les pales de rotor étant adaptées pour entraîner à rotation ledit rotor selon ledit axe de rotation (A) sous l'effet dudit flux d'air orienté,

**caractérisé en ce que** :

- certaines au moins des pales du rotor (5) possèdent un profil concave sur une face (9) de pale de rotor ;
- certaines au moins des pales de stator (3) possèdent également un profil concave sur une face (9) de pale de stator ;
- et **en ce que** les pales du rotor (5) possédant un profil concave ont une corde (14) qui est supérieure à la corde des pales de stator possédant un profil concave.

2. Dispositif (1) selon la revendication 1, **caractérisé en ce que** les pales du rotor possédant un profil concave ont chacune une ligne médiane de profil (Y) s'étendant entre un bord d'attaque (10) de la pale et un bord de fuite (11) de la pale et située à équidistance entre les faces opposées de cette pale et **en ce que** l'épaisseur (e) de la pale de rotor est variable en suivant cette ligne médiane (y).

3. Dispositif (1) selon la revendication 2, **caractérisé en ce que** chaque pale de rotor (5) a son bord d'attaque (10) situé à plus grande distance de l'axe de rotation (A) que son bord de fuite (11) et **en ce que** l'épaisseur (e) de chaque pale du rotor possédant un profil concave est en moyenne plus importante en se plaçant à proximité du bord d'attaque (10) qu'en se plaçant à proximité du bord de fuite (11).

4. Dispositif (1) selon l'une quelconque des revendications précédentes, **caractérisé en ce que** les pales du rotor à profil concave ont toutes leur face concave (9) orientée dans un même premier sens trigonométrique ou anti-trigonométrique par rapport à l'axe de rotation (A) du rotor et **en ce que** les pales de stator à profils concaves ont leurs faces concaves (9) toutes orientées dans un second sens opposé au premier.

5. Dispositif (1) selon l'une quelconque des revendications 1 à 4, **caractérisé en ce que** chaque pale de rotor (5) ayant un profil concave a son profil plus courbé à proximité d'un bord d'attaque (10) qu'à proximité d'un bord de fuite (11).

6. Dispositif selon l'une quelconque des revendications précédentes, **caractérisé en ce que** chaque pale de stator ayant un profil concave a son profil plus courbé à proximité d'un bord d'attaque qu'à proximité d'un bord de fuite (11) de cette pale.

7. Dispositif selon l'une quelconque des revendications 1 à 6, **caractérisé en ce que** toutes les pales de stator ont des profils de pales sensiblement identiques entre eux.

8. Dispositif selon l'une quelconque des revendications 1 à 7, **caractérisé en ce que** toutes les pales de rotor ont des profils de pales identiques entre eux.

9. Dispositif selon l'une quelconque des revendications 1 à 8, **caractérisé en ce qu'**au moins l'un desdits profils concaves de pales du rotor est une transformée, par rotation selon l'axe de rotation, d'un autre profil concave d'une autre pale du rotor.

10. Dispositif selon l'une quelconque des revendications 1 à 9, **caractérisé en ce qu'**au moins l'un desdits profils concaves de pales du stator est une transformée, par rotation selon l'axe de rotation, d'un autre profil concave d'une autre pale du stator.


**Patentansprüche**

1. Windkraftanlage (1), folgendes umfassend:

   - einen Stator (2), der mit Statorblättern (3) versehen ist;
   - einen Rotor (4), der mit Rotorblättern (5) versehen ist, und der im Inneren eines hohlen Bereichs des Stators (6) angeordnet ist,

wobei der besagte Rotor (4) im Verhältnis zum Stator (2) um eine Drehachse (A) drehbar ist, wobei die Statorblätter angeordnet sind, um eine Luftströmung (7) auf den Rotor zu richten, die von außerhalb des Stators kommt, und die Rotorblätter ausgeführt sind, um den besagten Rotor unter dem Einfluss der besagten gerichteten Luftströmung um die besagte Drehachse (A) zum Drehen zu bringen,

**dadurch gekennzeichnet, dass**:

- zumindest bestimmte Rotorblätter (5) auf einer Fläche (9) des Rotorblatts ein konkaves Profil aufweisen;
- zumindest bestimmte Statorblätter (3) auf einer Fläche (9) des Statorblatts ebenfalls ein konkaves Profil aufweisen;
- und dadurch, dass die Rotorblätter (5), die über ein konkaves Profil verfügen, eine Sehne (14) aufweisen, die größer ist, als die Sehne der Statorblätter, die über ein konkaves Profil verfügen.

**2.** Anlage (1) nach Anspruch 1, **dadurch gekennzeichnet, dass** die Blätter des Rotors, die über ein konkaves Profil verfügen, jeweils eine Profilmittellinie (Y) aufweisen, die sich zwischen einer Angriffskante (10) des Blatts und einer Hinterkante (11) des Blatts erstreckt und sich im gleichen Abstand zwischen den jeweils gegenüberliegenden Seiten dieses Blatts befindet und dadurch, dass die Dicke (e) des Rotorblatts entlang dieser Mittellinie (y) unterschiedlich ist.

**3.** Anlage (1) nach Anspruch 2, **dadurch gekennzeichnet, dass** jedes Rotorblatt (5) seine Angriffskante (10) aufweist, die sich im größeren Abstand zur Drehachse (A) befindet, als seine Hinterkante (11), und dadurch, dass die Dicke (e) eines jeden Blatts des Rotors, der ein konkaves Profil aufweist, im Durchschnitt in der Nähe der Angriffskante (10) größer ist, als in der Nähe der Hinterkante (11).

**4.** Anlage (1) nach einem der vorherigen Ansprüche, **dadurch gekennzeichnet, dass** die Blätter des Rotors mit einem konkaven Profil allesamt ihre konkave Fläche (9) in eine selbe erste trigonometrische oder anti-trigonometrische Richtung im Verhältnis zur Drehachse (A) des Rotors ausgerichtet haben, und dadurch, dass die Statorblätter mit konkaven Profilen alle ihre konkaven Flächen (9) in eine zweite Richtung ausgerichtet haben, die entgegengesetzt zur ersten verläuft.

**5.** Anlage (1) nach einem der Ansprüche 1 bis 4, **dadurch gekennzeichnet, dass** jedes Rotorblatt (5), das ein konkaves Profil aufweist, in der Nähe einer Angriffskante (10) ein gekrümmteres Profil aufweist, als in der Nähe der Hinterkante (11).

**6.** Anlage nach einem der vorherigen Ansprüche, **dadurch gekennzeichnet, dass** jedes Statorblatt, das ein konkaves Profil aufweist, in der Nähe einer Angriffskante ein gekrümmteres Profil aufweist, als in der Nähe einer Hinterkante (11) dieses Blatts.

**7.** Anlage nach einem der Ansprüche 1 bis 6, **dadurch gekennzeichnet, dass** alle Statorblätter Blattprofile aufweisen, die untereinander im Wesentlichen identisch sind.

**8.** Anlage nach einem der Ansprüche 1 bis 7, **dadurch gekennzeichnet, dass** alle Rotorblätter untereinander identische Blattprofile aufweisen.

**9.** Anlage nach einem der Ansprüche 1 bis 8, **dadurch gekennzeichnet, dass** zumindest eines der besagten konkaven Rotorblattprofile eine Transformation eines anderen konkaven Profils eines anderen Rotorblatts durch Drehung um die Drehachse ist.

**10.** Anlage nach einem der Ansprüche 1 bis 9, **dadurch gekennzeichnet, dass** zumindest eines der besagten konkaven Statorblattprofile eine Transformation eines anderen konkaven Profils eines anderen Statorblatts durch Drehung um die Drehachse ist.

**Claims**

**1.** A windmill device (1) comprising:

- a stator (2) provided with stator blades (3);

- a rotor (4) provided with rotor blades (5) and positioned inside a hollow area (6) of the stator, said rotor (4) being able to rotate with respect to the stator (2) about a rotation axis (A), the stator blades being disposed so as to direct towards the rotor an air flow (7) arriving from the outside of the stator and the blades of the rotor being suitable for causing said rotor to rotate on said rotation axis (A) under the effect of said directed air flow,

**characterised in that**:

- at least some of the rotor blades (5) have a concave profile on a rotor blade side (9);
- at least some of the stator blades (3) also have a concave profile on a stator blade side (9);
and **in that** the blades of the rotor (5) having a concave profile have a chord (14) that is greater than the chord of the stator blades having a concave profile.

2. Device (1) according to claim 1, **characterised in that** the blades of the rotor having a concave profile each have a profile centre line (Y) extending between a leading edge (10) of the blade and a trailing edge (11) of the blade and situated at equal distances between the opposite sides of this blade, and **in that** the thickness (e) of the rotor blade is variable along this centre line (Y).

3. Device (1) according to claim 2, **characterised in that** each rotor blade (5) has its leading edge (10) situated at a greater distance from the rotation axis (A) than its trailing edge (11) and **in that** the thickness (e) of each blade of the rotor having a concave profile is on average greater close to the leading edge (10) than close to the trailing edge (11).

4. Device (1) according to any one of the preceding claims, **characterised in that** the blades of the rotor with a concave profile all have their concave side (9) oriented in a same first counter clockwise or clockwise direction with respect to the rotation axis (A) of the rotor and **in that** the stator blades with concave profiles have their concave faces (9) all oriented in a second direction opposite to the first.

5. Device (1) according to any one of claims 1 to 4, **characterised in that** each rotor blade (5) having a concave profile has its profile more curved close to a leading edge (10) than close to a trailing edge (11).

6. Device according to any one of the preceding claims, **characterised in that** each stator blade having a concave profile has its profile more curved close to a leading edge than close to a trailing edge (11) of this blade.

7. Device according to any one of claims 1 to 6, **characterised in that** all the stator blades have blade profiles substantially identical to one another.

8. Device according to any one of claims 1 to 7, **characterised in that** all the rotor blades have blade profiles identical to one another.

9. Device according to any one of claims 1 to 8, **characterised in that** at least one of said concave blade profiles of the rotor is a mapping, by rotation about the rotation axis, of another concave profile of another blade of the rotor.

10. Device (1) according to any one of claims 1 to 9, **characterised in that** at least one of said concave blade profiles of the stator is a mapping, by rotation about the rotation axis, of another concave profile of another blade of the stator.

## Fig.1

## Fig.2

## Fig.3

## Fig.4

$e_{stator} = e(n)$

$y_{stator} = y_2(n)$

$Y_2$

$y_2$

0

0  n  1000  n

## Fig.5

$Y_2$

2000

1500

1000

500

0

-500

-1000

H10
H9
H8
H7
H6
H5
H4
H3
H2
H1

n=1000

n

13

**EP 1 907 696 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9807981 A